(19) **Europäisches Patentamt**

**European Patent Office**

**Office européen des brevets**

(11) Veröffentlichungsnummer: **0 236 699 B1**

(12) **EUROPÄISCHE PATENTSCHRIFT**

(45) Veröffentlichungstag der Patentschrift: 20.03.91

(51) Int. Cl.⁵: **F16C 13/00, D21G 1/02**

(21) Anmeldenummer: **87100768.8**

(22) Anmeldetag: **21.01.87**

(54) Walze.

(30) Priorität: 13.03.86 DE 3608374
22.11.86 DE 3639935

(43) Veröffentlichungstag der Anmeldung:
16.09.87 Patentblatt 87/38

(45) Bekanntmachung des Hinweises auf die
Patenterteilung:
20.03.91 Patentblatt 91/12

(84) Benannte Vertragsstaaten:
AT CH ES GB IT LI SE

(56) Entgegenhaltungen:
EP-A- 0 043 119          CH-A- 587 691
DE-A- 2 418 431          DE-A- 2 420 324
DE-A- 2 902 956          DE-C- 3 128 140

DAS PAPIER Band 40, Nr. 10, Oktober 1986,
Seiten 405-495, Darmstadt; G. CHRIST et al.:
"Die Voith-Profilwalze, zwei Jahre erfolgreich in Betrieb"

(73) Patentinhaber: **Eduard Küsters Maschinenfabrik**
**Gladbacher Strasse 457**
**W-4150 Krefeld 1(DE)**

(72) Erfinder: **Kubik, Klaus**
**Industriestrasse 16**
**W-4154 Tönisvorst 1(DE)**
Erfinder: **Küsters, Karl-Heinz**
**Hermann Schumacher Strasse 49**
**W-4150 Krefeld-Forstwald(DE)**

(74) Vertreter: **Patentanwälte Dipl.-Ing. Walter Kuborn Dipl.-Phys. Dr. Peter Palgen**
**Mulvanystrasse 2**
**W-4000 Düsseldorf(DE)**

## Beschreibung

Die Erfindung bezieht sich auf eine Walze der dem Oberbegriff des Anspruchs 1 entsprechenden Art.

Eine solche Walze ist aus der CH-A- 587 691 bekannt. Die hydraulische Abstützeinrichtung umfaßt hierbei eine Anzahl von längs des Querhaupts aufgereihten, gegen den Innenumfang der Hohlwalze wirkenden kolbenartigen Stützelementen, die auf der Anlageseite hydrostatische Lagertaschen aufweisen, denen vom Innern des Querhaupts ·her Druckflüssigkeit zuführbar ist, die über den Rand der Lagertaschen abströmt und dort einen tragfähigen Stützfilm bildet. Außerdem sind längs des Querhaupts aufgereihte entsprechend ausgebildete Anpreßelemente vorgesehen, die mit einem Wärmetransportmittel beschickt werden können. Die an den Stützelementen und den Anpreßelementen überströmende Flüssigkeit vereinigt sich und wird als Mischung abgeführt.

Wenn die Druckflüssigkeit für die Stützelemente und das Wärmeträgermedium für die Anpreßelemente verschieden sind, muß die Mischung nach dem Verlassen der Walze verworfen werden. Dies kommt in der Praxis nicht in Betracht, und es werden daher die Druckflüssigkeit für die Stützelemente und das Wärmeträgermedium durch ein und dasselbe Hydrauliköl gebildet werden.

Allerdings sind den erzielbaren Temperaturen hierbei Grenzen gesetzt, weil bei den bekannten Konstruktionen die Druckflüssigkeit gleichzeitig zur Schmierung der Lager verwendet wird und sich die üblichen Druckflüssigkeiten, die noch gute Schmiereigenschaften für die Lager aufweisen, bei höheren Temperaturen zersetzen und andererseits Flüssigkeiten, die höhere Temperaturen vertragen, keine ausreichenden Schmiereigenschaften aufweisen. Wenn also bei den bekannten Konstruktionen eine Beheizung vorgenommen werden soll und ein und dieselbe Flüssigkeit sowohl zur Ausübung des Drucks und zur Lieferung der Wärme als auch zur Schmierung der Lager dient, gibt es eine Grenztemperatur, die mit den heute bekannten Flüssigkeiten nicht überschritten werden kann.

Das Querhaupt ist an seinen Enden über Pendellager in dem Bereich kleineren Innendurchmessers von lagerglockenartigen Stützen gelagert, die zum Einbau in einen Walzenständer oder dergleichen bestimmt sind. Auch die Ansätze an den Enden der Hohlwalze sind in den Stützen gelagert. Solange die Hohlwalze gerade bleibt und die Hohlwalze und die Stützen also fluchten, entstehen keine Probleme. Sobald sich die Hohlwalze aber durchbiegt, treten entweder an den Ansätzen ganz erhebliche Biegemomente auf, die von den Lagern in den Stützen abgefangen werden müssen, oder es müssen die Stützen in dem Maschinenständer durch Pendellager abgestützt sein, die bei der gezeigten Konstruktion nur außerhalb der Stützen angebracht sein könnten und zu sehr großen Außendurchmessern der Anordnung führten. Der Fall der Durchbiegung der Hohlwalze kommt durchaus häufig vor, zum Beispiel beim Zusammenwirken mit einer konventionellen sich unter der Linienkraft wegbiegenden Gegenwalze.

Den gattungsgemäßen Walzen des Standes der Technik wohnen also Probleme beheizungsmäßiger und schmierungsmäßiger wie auch konstruktiver Art inne.

Der Erfindung liegt die Aufgabe zugrunde, eine in üblichen Walzenständern einfach unterzubringende, gegen Durchbiegungen der Hohlwalze unempfindliche Walze zu schaffen, mit der Außentemperaturen von etwa 240 bis 250° C am Umfang gefahren werden können, wozu Temperaturen der Wärmeträgerflüssigkeit im Innern der Hohlwalze von 260 bis 280° C notwendig sind.

Diese Aufgabe wird durch die in Anspruch 1 wiedergegebene Erfindung gelöst.

Es ist hierdurch erreicht, daß die Flüssigkeit, die sich dank welcher konstruktiver Ausbildung auch immer in dem Zwischenraum zwischen Hohlwalze und Querhaupt befindet und die Wärme überträgt, von der Schmierflüssigkeit für das die Drehung der Hohlwalze aufnehmende Lager getrennt ist und auch der räumliche Abstand so groß ist, daß keine wesentliche Wärmeübertragung von der heißen Wärmeträgerflüssigkeit auf die Schmierflüssigkeit stattfindet.

Die eigentliche Menge der Wärmeträgerflüssigkeit verbleibt ohnehin innerhalb der Hohlwalze zwischen den Endquerdichtungen. Allenfalls geringe Mengen treten unter den Endquerdichtungen hindurch in den Zwischenraum zwischen dem Querhaupt und dem Innenumfang des Ansatzes ein, wobei aber diese Flüssigkeit durch die am Ende des Ansatzes vorgesehene Dichtung am Überströmen in den Lagerbereich gehindert wird.

Das Lager ist also radial und axial von der Hauptmenge der Wärmeträgerflüssigkeit getrennt. Außerdem steht das Lager unter der Kühlwirkung der ständig neu herangeführten, an der Wärmeübertragung nicht mehr beteiligten und daher kalten Schmierflüssigkeit.

Daß die äußeren Kräfte in dem Bereich verringerten Innendurchmessers der Lagerglocke, also axial gegenüber dem Lager nach außen versetzt, angreifen, hat den Grund, daß diesem Bereich auch ein entsprechend verringerter Außendurchmesser erteilt werden kann, so daß das äußere Lager, auf welchem sich die Lagerglocke in einem Maschinenständer oder dergleichen abstützt, in seinem Außendurchmesser unter dem der Hohlwalze bleibt, was aus konstruktiven und Montagegründen wichtig ist.

Da die äußeren Kräfte an einer Stelle eingeleitet werden, die axialen Abstand zu dem Lager aufweist, ergibt sich ein Drehmoment in der Wirkebene der Walze auf die Lagerglocke, zu dessen Abfangung der spielfreie Sitz der Lagerglocke auf einer 'Stützlänge" erforderlich ist. Diese Stützlänge korrespondiert also mit der Tatsache, daß die Einleitung der äußeren Kräfte und das Lager in Achsrichtung Abstand voneinander aufweisen.

Die Erfindung ist von der Art der hydraulischen Stützeinrichtung im Innern der Hohlwalze unabhängig. Es kann sich außer um eine Konstruktion wie in der CH-A- 587 691 auch um Walzen nach der DE-A-24 20 324 (also ohne zusätzliche Anpreßelemente), nach der DE-A-29 02 956 (mit zusätzlichen Sprüheinrichtungen für Heizflüssigkeit) oder auch um eine Schwimmende Walze etwa nach der DE-C-31 28 140 und dergleichen handeln.

Eine ausreichende beispielsweise Bemessung der Stützlänge ist in Anspruch 2 wiedergegeben.

Damit die Wärmeübertragung von der heißen Druck- und Wärmeträgerflüssigkeit in das Querhaupt und auch gegen die Lager hin hintangehalten wird, empfiehlt sich die Ausgestaltung nach Anspruch 3.

Die Dichtung am Ende des Ansatzes ist zweckmäßig eine Gleitringdichtung, weil diese gewisse Fluchtfehler zwischen dem Ansatz und dem Querhaupt, die durch die Durchbiegung des Querhaupts innerhalb der Hohlwalze unter Last vorkommen, ausgleichen kann (Anspruch 4).

Die an die Gleitringdichtung gelangende Wärmeträgerflüssigkeit hat unter dem Einfluß des Luftsauerstoffs die Tendenz, auf der Gleitfläche zu verlacken, was die Dichtwirkung auf die Dauer beeinträchtigt. Um dem entgegenzuwirken, empfiehlt sich die Ausgestaltung nach Anspruch 5. Als inertes Gas kommt z.B. Stickstoff infrage.

Damit keine zu starke Strömung von eine erhebliche Temperatur aufweisender Flüssigkeit in den Zwischenraum zwischen dem Ansatz und dem Querhaupt hinein stattfindet, empfiehlt sich der Abweisring nach Anspruch 6, der eine Art Grobdichtung darstellt und die ankommende Flüssigkeit zum großen Teil in den Zwischenraum zwischen Querhaupt und Hohlwalze zurücklenkt, wo sie abgesaugt wird. Die an dem die Hauptmenge zurückhaltenden Abweisring in dem Zwischenraum zwischen Ansatz und Querhaupt übertretende Flüssigkeitsmenge ist geringfügig, so daß von ihr keine wesentlichen Wärmemengen in die umgebenden Konstruktionsteile abgegeben werden.

Bei einer Schwimmenden Walze wird die Druckkammer der Länge nach von der heißen Druck- und Wärmeträgerflüssigkeit durchströmt. An dem dem Einlaß gegenüberliegenden Ende tritt die Flüssigkeit in die gegenüberliegende Leckkammer über und strömt in dieser zurück, um gegenüber dem Einlaß in der Druckkammer abgesaugt zu werden. Die Flüssigkeit strömt also im Gegenstrom, um einen Temperaturausgleich herbeizuführen. Auf der Seite der Leckkammer ist in manchen Fällen keine Endquerdichtung vorhanden. Der Abweisring dient in diesem Fall zum Zurückweisen der anströmenden, immer noch sehr heißen Leckflüssigkeit in die Leckkammer.

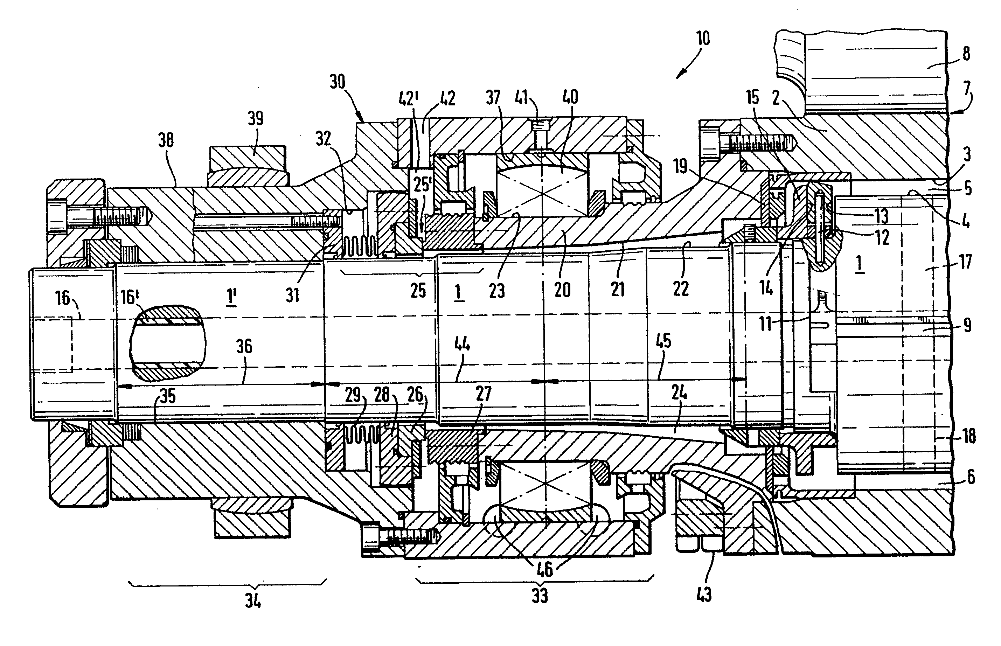

In der Zeichnung ist ein Ausführungsbeispiel der Erfindung anhand einer Schwimmenden Walze dargestellt.

Sie zeigt einen Teillängsschnitt durch das linke Ende einer erfindungsgemäßen Walze.

Die in der Zeichnung als Ganzes mit 10 bezeichnete Walze umfaßt ein feststehendes Querhaupt 1 in Gestalt eines im wesentlichen massiven und zylindrischen Trägers, um welchen eine Hohlwalze 2 umläuft, die mit ihrem Innenumfang 3 Abstand von dem Außenumfang 4 des Querhaupts 1 beläßt. Der zylindrische Zwischenraum zwischen dem Innenumfang 3 der Hohlwalze 2 und dem Außenumfang 4 des Querhaupts 1 ist in eine auf der Seite des Walzspalts 7, d.h. auf der Seite einer Gegenwalze 8, gelegene Längskammer 5 (Druckkammer) und eine auf der gegenüberliegenden Seite gelegene Längskammer 6 (Leckkammer) unterteilt, und zwar durch am Querhaupt angeordnete, am Innenumfang 3 der Hohlwalze 2 dichtend anliegende Längsdichtungen 9, die zu beiden Seiten des Querhaupts 1 an dessen breitester Stelle angeordnet sind und von denen in der Zeichnung nur die vordere Längsdichtung 9 zu sehen ist. Die Längskammern 5,6 haben also etwa die Gestalt zylindrischer Halbschalen, und es ist die Längskammer 5 (Druckkammer) an beiden Enden durch Endquerdichtungen 11 geschlossen. Die Endquerdichtungen 11 haben in dem Ausführungsbeispiel die Form von Halbringen, die sich über die obere Hälfte des Querhaupts 1 erstrecken und mit ihrem Außenumfang am Innenumfang 3 der Hohlwalze 2 anliegen. Die Endquerdichtungen 11 sind an Führungsstiften 12 geführt, die sich senkrecht zur Achse des Querhaupts 1 in der Wirkebene erstrecken, d.h. in der Ebene, in der die Resultierende der von der Druckflüssigkeit in der Längskammer 5 ausgeübten Kräfte liegt. Diese Wirkebene fällt in vielen Fällen mit der Verbindungsebene der Achse der Hohlwalze 2 und der Achse der Gegenwalze 8 zusammen.

Die Endquerdichtung 11 hat einem im wesentlichen rechteckigen Querschnitt und liegt mit einer Flanke an einem Absatz 13 des Querhauptes 1 an, mit der anderen Flanke an der Flanke 14 eines von dem Führungsstift 12 auf dem Querhaupt 1 festgehaltenen Halterings 15.

Die Längsdichtungen 9 auf den beiden Seiten bilden mit den an den beiden Enden der Hohlwalze 2 angebrachten Endquerdichtungen eine geschlossene Druckkammer 5, die über eine isolierte Zuleitung 16, die in einen Einlaß 17 an der Oberseite des Querhauptes 1 mündet, mit Druck- und Wärmeträgerflüssigkeit versorgt werden kann. Die Druck- und Wärmeträgerflüssigkeit strömt in der Längskammer 5 gemäß der Zeichnung nach rechts, tritt nahe dem dortigen Ende der Längskammer 5 durch einen Querkanal in die Leckkammer 6 über und strömt in dieser wieder von rechts nach links, um an einem Auslaß 18 und einem nicht dargestellten Auslaßkanal wieder abgesaugt zu werden. Die Leckkammer 6 ist manchmal auch mit Druckflüssigkeit gefüllt. Sie hat dann ebenfalls Endquerdichtungen. Der Druck in der Leckkammer 6 ist dann allerdings geringer als der in der Leckkammer 5. Für die Ausübung des Liniendrucks im Walzspalt 7 ist die Differenz der Drücke in den beiden Kammern 5,6 maßgebend.

In dem gezeigten Ausführungsbeispiel jedoch ist die Leckkammer nach links nicht durch eine Endquerdichtung abgeschlossen. Es kann also Druckflüssigkeit an dem Auslaß 18 vorbei nach links über die Flanke 13 hinaus übertreten. Damit die Hauptmenge in der Leckkammer 6 verbleibt, ist ein Abweisring 19 vorgesehen, der anströmende Flüssigkeit wieder in die Leckkammer 6 zurücklenkt, wo sie über den Auslaß 18 abgeführt wird.

Handelt es sich nicht um eine Schwimmende Walze, sondern z.B. um eine Walze mit einer Reihe gegen den Innenumfang 3 der Hohlwalze 2 wirkender Druckelemente, so bedarf es keiner druckdicht abgedichteten Längskammer 5, d.h. es können die Längsdichtung 9 und gegebenenfalls auch die Endquerdichtung 11 fehlen. Die Abgrenzung nach links wird von dem Abweisring 19 übernommen. In dem Zwischenraum zwischen dem Querhaupt 1 und der Hohlwalze 2 befindet sich Druckflüssigkeit, die aus den Druck- und/oder Heizelementen ausgetreten ist, die in dem am rechten Ende der Zeichnung gelegenen Bereich des Zwischenraums angeordnet sind. In dem links vom Abweisring 19 gelegenen Bereich jedoch ist die nachstehend beschriebene Ausbildung bei allen gattungsgemäßen Ausführungsformen gleich.

An der Hohlwalze 2 ist stirnseitig ein hülsen- oder buchsenartiger Ansatz 20 befestigt, der die Hohlwalze 2 fortsetzt und dessen Außenumfang 23 einen geringeren Durchmesser als der Außendurchmesser der Hohlwalze 2 besitzt. Der Innenumfang 21 des Ansatzes 20 beläßt einen geringen Abstand zum Außenumfang 22 des aus der Hohlwalze 2 hervorragenden Endes des Querhauptes 1. Es ist also ein Abstandsraum 24 gebildet, in welchen geringfügige Anteile der Druck- und Wärmeträgerflüssigkeit aus der Leckkammer 6 übertreten können, wenn sie den Abweisring 19 überwunden haben. Eine wesentliche Strömung kann in dem Abstandsraum 24 jedoch nicht stattfinden, weil dieser am in der Zeichnung linken Ende durch eine als Ganzes mit 25 bezeichnete Gleitringdichtung verschlossen ist. Die Gleitringdichtung 25 umfaßt den eigentlichen Gleitring 26, der an seinem Innenumfang Abstand vom Querhaupt 1 beläßt, den Gegenring 27, der mit der Stirnseite des Ansatzes 20 verbunden ist, einen Führungsring 28, der den Gleitring 26 in der richtigen Position hält und der über einen Metallbalg 29 abgedichtet ist. Der Metallbalg 29 ist an seinem einen axialen Ende dicht mit dem Führungsring 28 verbunden, an dem anderen axialen Ende mit einem Haltering 31, der in einer zylindrischen Ausnehmung 32 einer als Ganzes mit 30 bezeichneten Lagerglocke befestigt ist. Die Lagerglocke 30 ist in dem Ausführungsbeispiel zweiteilig ausgeführt und besitzt einen Bereich 33 größeren Innendurchmessers, der der Hohlwalze 2 zugewandt ist und einen geringfügig kleineren Außendurchmesser als diese aufweist, sowie einen daran anschließenden Bereich 34 kleineren Innen- und Außendurchmessers, der mit seinem zylindrischen Innenumfang 35 auf dem zylindrischen Endteil 1′ des Querhauptes 1 spielfrei aufgeschoben ist. Diese Anordnung ergibt eine Führungslänge 36, die die Fluchtung zwischen der Achse des Querhauptes und der Achse der Lagerglocke 30 aufrechterhält, auch wenn die Lagerglocke 30 außerhalb des Bereichs 34 radial belastet wird. Eine solche Belastung kommt durch das Lager 40 zustande, welches in dem Bereich 33 der Lagerglocke 30 zwischen dessen Innenumfang 37 und dem Außenumfang 23 des Ansatzes 20 angeordnet ist und auf welchem die Hohlwalze 2 an der Lagerglocke 30 drehbar abgestützt ist. Da sich das Querhaupt 1 innerhalb der Hohlwalze 2 bei Belastung durchbiegt und die Lagerglocke 30, da sie ja über die Führungslänge 36 fest mit dem Querhaupt 1 verbunden ist, dieser Durchbiegung folgt, die Hohlwalze 2 aber nicht, sind die Lager 40 als Pendellager ausgebildet, die Fluchtfehler zwischen den Flächen 23 und 37 ausgleichen können.

Die äußeren Kräfte werden in das aus der Hohlwalze 2 vorstehende Ende 1′ des Querhauptes 1 in dem Bereich 34 der Lagerglocke 30 eingeleitet, und zwar durch das auf dem dortigen Außenumfang 38 der Lagerglocke 30 angeordnete Pendellager 39, welches aber im Gegensatz zu dem Pendellager 40 kein Drehlager ist, da ja die Lagerglocke 30 ebenso wie das Querhaupt 1 stillsteht. Da der Außenumfang 38 des Bereichs 34 der Lagerglocke 30 einen wesentlich geringeren Durchmesser als die Hohlwalze 2 aufweist, kann erreicht werden, daß der Außendurchmesser des Pendellagers 39 ebenfalls noch kleiner ist als der Außendurchmesser der Hohlwalze 2, was aus konstruktiven Gründen erwünscht ist.

Durch die gezeigte Konstruktion ist es möglich, den Kreislauf der Druck- und Wärmeträgerflüssigkeit in den Längskammern 5 und 6 gänzlich von dem Schmierkreislauf für das Lager 40 zu trennen. Die Druck- und Wärmeträgerflüssigkeit kann zwar noch in den Zwischenraum 24 eindringen, jedoch nur bis zu der Gleitringdichtung 25. Die Schmierflüssigkeit für die Lager 40 wird an dem Einlaß 41 oben zugeführt und an den Auslässen 46 drucklos, d.h. ohne Staubildung, unten wieder abgesaugt, zusammen mit etwaigen minimalen Mengen an der Gleitringdichtung 25 übergetretener Flüssigkeit aus dem Zwischenraum 24. Da die Flüssigkeit in dem Zwischenraum 24 steht und nicht strömt, kühlt sie sich sehr rasch ab, so daß ein nennenswerter Wärmeübergang in das Lager 40 nicht stattfindet. Hierzu trägt auch die Isolierung 16' der Zuleitung 16 bei.

Die Gleitfläche 25' der Gleitringdichtung 25 ist von einer Kammer 42' ringförmig umgeben, der durch eine Zuleitung 42 Stickstoff zuführbar ist. Dadurch wird verhindert, daß aus dem Zwischenraum 24 an der Gleitfläche 25' übertretende Wärmeträgerflüssigkeit mit Luftsauerstoff in Berührung kommt und auf der Gleitfläche 25' verlackt.

Der Antrieb der Hohlwalze 2 kann gewünschtenfalls auf einfache Weise durch ein am Ende der Hohlwalze 2 angeordnetes Kettenrad und eine darumgeschlungene Kette erfolgen, wie es bei 43 im unteren Teil der Zeichnung dargestellt ist.

Die Führungslänge 36 muß einen gewissen Wert aufweisen, damit die Lagerglocke 30 ausreichend gegen die vom Lager 40 eingeleiteten Kippkräfte abgestützt ist. Die Führungslänge ist größenordnungsmäßig etwa gleich dem Abstand von dem der Hohlwalze 2 zugewandten Ende des zylindrischen Innenumfangs 35 der Lagerglocke 30 bis zur Mitte des Lagers 40 und ebenfalls größenordnungsmäßig etwa gleich dem Abstand von dieser Mitte bis zum Ende der Hohlwalze 2. Es ergibt sich auf diese Weise die nötige Distanz zwischen der heißen Zone im Bereich der Längskammern 5 und 6 und dem Lager 40. Auch erhält der Zwischenraum 24 zwischen dem Ansatz 20 und dem Ende des Querhauptes 1 dadurch eine gewisse Länge, so daß sich etwa noch übertretende Druck- und Wärmeträgerflüssigkeit in diesem Zwischenraum "totlaufen" kann und es im Bereich des Lagers 40 nicht mehr zu nennenswerten Strömungen und Wärmetransporten kommt.

**Ansprüche**

1. Walze (10)
   mit einer den arbeitenden Walzenumfang bildenden umlaufenden Hohlwalze (2),
   mit einem diese der Länge nach durchgreifenden, ringsum Abstand zum Innenumfang (3) der Hohlwalze (2) belassenden feststehenden Querhaupt (1), auf welches an den aus der Hohlwalze (2) hervorragenden Enden (1') äußere Kräfte aufbringbar sind,
   mit einer am Querhaupt (1) vorgesehenen, innerhalb der Hohlwalze (2) auf der Seite des Walzspalts (7) wirkenden hydraulischen Einrichtung zur Abstützung der Hohlwalze (2) am Querhaupt (1),
   mit einer an jedem Ende der Hohlwalze angeordneten Endquerdichtung zur axialen Abdichtung des Bereichs der hydraulischen Einrichtung nach außen,
   mit mindestens einer ein hervorragendes Ende (1') des Querhaupts (1) umgebenden, einen Bereich (33) großen Innendurchmessers und einen zum nahegelegenen Ende der Walze (10) hin axial benachbarten Bereich (34) geringeren Innendurchmessers aufweisenden Lagerglocke (30),
   mit einem im Außendurchmesser verringerten axialen Ansatz (20) an der Hohlwalze (2), mit welchem die Hohlwalze (2) in den Bereich (33) größeren Innendurchmessers der Lagerglocke (30) eingreift, wobei das Querhaupt (1) den Ansatz (20) mit radialem Spiel durchgreift und sich bis in den axial außen gelegenen Bereich (34) verringerten Innendurchmessers der Lagerglocke (30) hineinerstreckt,
   und mit einem zwischen der Außenseite (23) des Ansatzes (20) und dem Innenumfang (37) des Bereichs (33) vergrößerten Innendurchmessers der Lagerglocke (30) vorgesehenen Lager (40), auf welchem die Hohlwalze (2) auf dem Querhaupt (1) drehbar abgestützt ist, dadurch gekennzeichnet,
   daß das Lager (40) eine eigene Schmiermittelzu- und -abfuhr (41,46) aufweist,
   daß zwischen dem Ende des Ansatzes (20) und der Lagerglocke (30) eine Dichtung (25) gegen den Austritt zwischen dem Ansatz (20) und dem Querhaupt (1) befindlicher Flüssigkeit vorgesehen ist,
   daß die Lagerglocke (30) in dem Bereich (34) verringerten Innendurchmessers mit ihrem zylindrischen Innenumfang (35) das dort zylindrische Ende (1') des Querhauptes (1) spielfrei auf einer Stützlänge (36) umgreift
   und daß die äußeren Kräfte am Außenumfang (38) des Bereichs (34) verringerten Innendurchmessers der Lagerglocke (30) angreifen, der im Außendurchmesser gegenüber dem Bereich (33) ebenfalls verringert ist.

2. Walze nach Anspruch 1, dadurch gekennzeichnet, daß die Stützlänge (36) mindestens dem Abstand zwischen dem der Hohlwalze (2) zugewandten Ende des Bereichs (34) und der Mitte des Lagers (40) entspricht.

3. Walze nach Anspruch 1 oder 2, dadurch gekennzeichnet, daß die Zuleitung (16) der Druck- und Wärmeträgerflüssigkeit zu der auf der Seite des Walzspalts (7) gelegenen Längskammer (5) im Querhaupt (1) wärmeisoliert ist.

4. Walze nach einem der Ansprüche 1 bis 3, dadurch gekennzeichnet, daß die Dichtung (25) eine Gleitringdichtung ist.

5. Walze nach Anspruch 4, dadurch gekennzeichnet, daß im Bereich der Gleitfläche (25') der Gleitringdichtung (25) eine Zuleitung (42) für ein inertes Gas vorgesehen und rings um die Gleitfläche (25') eine Atmosphäre des inerten Gases erzeugbar ist.

6. Walze nach einem der Ansprüche 1 bis 5, dadurch gekennzeichnet, daß am Ende der Hohlwalze (2) ein Abweisring (19) vorgesehen ist, der den überwiegenden Teil der aus der Leckkammer (6) anströmenden Druck- und Wärmeträgerflüssigkeit in die Leckkammer (6) zurücklenkt.

## Claims

1. Roll (10)

with a rotating hollow roll (2) forming the working roll surface,

with a stationary transverse beam (1) extending through the latter along its length, and leaving a spacing around its periphery from the inner surface (3), of the hollow roll (2), on which beam external forces can be applied to the ends (1') which project out of the hollow roll (2)

with a hydraulic device for supporting the hollow roll (2) on the transverse beam (1) this device being provided on the transverse beam (1) and acting within the hollow roll (2) on the side nearest the rolling gap (7),

with a transverse end seal arranged on each end of the hollow roll for axially sealing the region of the hydraulic device outwardly,

with at least one bearing bell (30) surrounding a projecting end (1') of the transverse beam (1), having a region (33) of large internal diameter and a region (34) of smaller inside diameter axially adjacent the nearer end of the roll (10),

with an axial extension (20) of reduced outside diameter on the hollow roll (2) by which the hollow roll (2) engages in the region (33) of large inside diameter of the bearing bell (3), the transverse beam (1) extending through the extension (10) with radial play and extending inwards up to within the axially outwardly placed region (34) of reduced inside diameter of the bearing bell (30),

and with a bearing (40) provided between the outside (23) of the extension (20) and the inner surface (37) of the region (33) of increased inside diameter of the bearing bell (39) on which bearing the hollow roll (2) is rotatably mounted on the transverse beam (1), characterised in that,

the bearing (40) has its own lubricant supply and removal (41, 46)

between the end of the extension (20) and the bearing bell (30) there is provided a seal (25) against the escape of fluid present between the extension (20) and the transverse beam (1),

the bearing bell (30) in the region (34) of reduced inside diameter surrounds with its cylindrical inside surface (35) the cylindrical end (1') of the transverse beam (1), present there, without play on a supporting length (36)

and the external forces act on the outer surface (38) of the region (34) of reduced inside diameter of the bearing bell (30) which is likewise reduced in outside diameter in comparison with the region (33).

2. Roll according to claim 1 characterised in that the supporting length (36) corresponds at least to the spacing between the end of the region (34) which is towards the hollow roll (2) and the middle of the bearing (40).

3. Roll according to Claim 1 or 2 characterised in that the feed (16) of pressure and heat transfer fluid to the longitudinal chamber (5) in the transverse beam (1) placed on the rolling gap side (7) is thermally insulated.

4. Roll according to one of claims 1 to 3 characterised in that the seal (25) is a mechanical face seal.

5. Roll according to claim 4 characterised in that in the region of the rubbing face (25') of the mechanical face seal (25) a feed (42) for an inert gas is provided and an atmosphere of inert gas is obtainable around the rubbing surface (25').

6. Roll according to one of claims 1 to 5 characterised in that a deflecting ring (19) is provided on the end of the hollow roll (2) and turns back into the leakage chamber (6) the greater part of the pressure and heat transfer fluid flowing from the leakage chamber (6).

## Revendications

1. Rouleau (10)
   - comprenant un rouleau creux (2) enveloppant la périphérie du rouleau en fonctionnement,
   - avec une traverse fixe (1) traversant le rouleau creux dans l'axe longitudinal et laissant autour d'elle un espace par rapport à la périphérie intérieure (3) du rouleau creux (2) par laquelle s'appliquent les forces extérieures au niveau des extrémités (1') faisant saillie du rouleau creux (2) avec un dispositif hydraulique prévu sur la traverse (1) agissant à l'intérieur du rouleau creux (2) sur le côté de l'écartement du rouleau (7) pour appuyer le rouleau creux (2) sur la traverse (1),
   - avec une étanchéité transversale disposée à chaque extrémité du rouleau creux par rapport à l'étanchéité axiale de la zone du dispositif hydraulique vers l'extérieur,
   - avec au moins un chapeau de palier (30) entourant une extrémité (1') faisant saillie de la traverse (1') ; ce chapeau de palier (30) présente une zone de grand diamètre intérieur et une zone de plus petit (34) diamètre intérieur voisine axialement par rapport à l'extrémité évidente du rouleau (10),
   - avec une saillie axiale (20) par rapport au rouleau creux (2), de diamètre extérieur plus petit, avec laquelle le rouleau creux (2) prend appui, dans la zone (33) de grand diamètre intérieur du chapeau de palier (30), la traverse (1) entoure la saillie (20) par un jeu radial et se prolonge axialement dans la zone (34) extérieure axiale du plus petit diamètre intérieur du chapeau de palier,
   - et avec un palier (40) situé entre le côté extérieur (23) de la saillie (20) et le périmètre intérieur (37) de la zone (33) de plus grand diamètre intérieur du chapeau de palier ; sur ce palier (40) le rouleau creux (2) s'appuie en tournant autour de la traverse (1)
   caractérisé en ce que :
   - le palier (40) dispose de son propre dispositif de graissage avec alimentation et vidange (41, 46),
   - entre l'extrémité de la saillie (20) et le chapeau de palier (30) on a prévu une étanchéité (25) à l'état liquide empêchant le déboîtement entre la saillie (20) et la traverse (1),
   - le chapeau de palier (30) dans la zone (34) de petit diamètre intérieur entoure avec son enveloppe interne cylindrique l'extrémité cylindrique (1') de la traverse (1) sur une longueur de supportage (36), sans jeu,
   - les forces extérieures s'appliquent au niveau du périmètre externe (38) de la zone (34) de petit diamètre intérieur du chapeau de palier, zone qui a un diamètre extérieur plus petit que celui de la zone (33).

2. Rouleau conforme à la revendication 1, caractérisé en ce que la longueur de supportage (36) correspond au minimum à la distance entre l'extrémité de la zone (34) tournée vers le rouleau creux, et la partie médiane du palier (40).

3. Rouleau conforme aux revendications 1 ou 2, caractérisé en ce que l'amenée (16) du fluide transmettant la pression et la chaleur jusqu'à la chambre longitudinale (5), située sur le côté de l'espacement entre les rouleaux, est isolée thermiquement à l'intérieur de la traverse.

4. Rouleau conforme à l'une des revendications 1 à 3, caractérisé en ce que l'étanchéité (25) est constituée par une garniture étanche à anneau glissant.

5. Rouleau conforme à la revendication 4, caractérisé en ce que dans la zone de la surface de glissement de la garniture étanche à anneau glissant, on a prévu une amenée (42) de gaz inerte et autour de la surface de glissement une atmosphère en gaz inerte est produite.

6. Rouleau conforme à l'une des revendications 1 à 5, caractérisé en ce qu'à l'extrémité du rouleau creux, on a prévu un anneau de renvoi qui assure la recirculation vers la chambre de fuite (6) de la plus grande partie du débit du fluide transmettant la pression et la chaleur en provenance de cette chambre (6).